# EUROPEAN PATENT APPLICATION

(11) **EP 2 325 735 A2**
(43) Date of publication of application: **25.05.2011**
(21) Application number: 10189924.3
(22) Date of filing: 04.11.2010
(51) Int. Cl.: G06F 3/042

(54) **Multi-touch detecting apparatus and method for LCD display apparatus**

(30) Priority: 23.11.2009 KR 20090113392
(71) Applicant: SAMSUNG ELECTRONICS CO., LTD., Suwon-si Gyeonggi-do 442-742 (KR)
(72) Inventor: Seo, Young-kwang, Seoul (KR); Park, Seung-kwon, Gyeonggi-do (KR); Kang, Jung-min, Seoul (KR); Jeong, Ki-jun, Seoul (KR); Lee, Dong-ho, Seoul (KR)
(74) Representative: Grootscholten, Johannes A.M.

(57) **Abstract**

A multi-touch detecting apparatus includes a liquid crystal display (LCD) module which includes an LCD panel and a backlight unit (BLU), a plurality of infrared light sources which emits infrared light toward the LCD module, an infrared light detecting camera which is disposed proximate a rear surface of the LCD panel, and detects infrared light reflected from an object on the LCD panel, and a control unit which turns off the BLU when the infrared light detecting camera is turned on.

## Description

### CROSS-REFERENCE TO RELATED APPLICATION

This application claims priority from Korean Patent Application No. 10-2009-0113392, filed November 23, 2009 in the Korean Intellectual Property Office, the disclosure of which is incorporated herein by reference in its entirety.

### BACKGROUND

### 1. Field

Apparatuses and methods consistent with exemplary embodiments relate to a multi-touch detecting of two or more touched positions, for example, on touch screens and electronic blackboards, and more particularly, to a multi-touch detecting applicable to a liquid crystal display (LCD) apparatus.

### 2. Description of the Related Art

Touch screen displays are used in portable electronic devices, such as mobile phones, portable multimedia players (PMPs), personal digital assistants (PDAs), and the like. In general, the touch screen technology detects change in voltage or electrical resistance at a point touched by a finger or an object using a single point detecting method. However, the single point detection technology cannot be used with the display apparatuses which detect various inputs at the same time, such as with the electronic blackboards.

Recently, in order to overcome this shortcoming, multi-touch screen technology to detect the multi-inputs in the projection devices has been developed. The related art multi-touch screen technology methods include a Fourier transform infrared spectroscopy (FTIR) scheme using an infrared light source and an infrared light detecting camera, a Rear Diffused Illumination (Rear-DI) scheme, and an LED-Light Plane (LED-LP) scheme.

In the FTIR scheme, a plurality of infrared light sources is disposed on the edge of a touch screen. Infrared light emitted from the infrared light sources moves within the interior of a transparent panel which is in contact with a finger of a user. When the infrared light is scattered at a point touched by the finger, an infrared light detecting camera disposed under the transparent panel detects the scattered and reflected infrared light, so that the presence of the touch can be detected. The amount of scattered infrared light correlates with an area touched by the finger.

In the FTIR scheme, an area touched by the finger is comparatively easily detected since the infrared light is scattered around the center of the area touched by the finger. Accordingly, the center of the touched area can be measured easily and quickly. However, if the finger which is in contact with the transparent panel drags itself on the transparent panel, an area touched by the finger is altered. Accordingly, the amount of scattered infrared light detected by the infrared light detecting camera may be reduced, and the detection capability of the infrared light detecting camera may be diminished. Therefore, it may be difficult to track points touched by the finger through the camera vision processing. In order to solve this problem, a compliant layer may be disposed on the front surface of a transparent panel. However, to have such layer added to the LCD apparatuses is not desirable and difficult to implement.

In the Rear-DI scheme, an infrared light source and an infrared light detecting camera to detect infrared light emitted from the infrared light source are disposed on the same plane. The infrared light detecting camera detects infrared light reflected by a touch by a finger or an object and detects a touched point. However, in an LCD apparatus, a plurality of optical sheets is piled in an LCD module, so that the infrared light is attenuated while going through the optical sheets. Thus, the detection capability of the infrared light detecting camera may be diminished unless the optical sheets are modified. This makes it difficult to apply the Rear-DI structure to LCD apparatuses.

The LED-LP scheme is a modification of the FTIR scheme. In LED-LP scheme, the infrared light moves along the front surface of the transparent panel. Under this structure, the shortcoming of the FTIR scheme in tracking the points touched by the finger can be overcome, but it is difficult to detect the center of a point touched by the finger, similar to the Rear-DI scheme.

As described above, the FTIR, Rear-DI, and LED-LP schemes are technologies related to a multi-touch detecting apparatus which can be applied to a projection system. However, it is difficult to apply these schemes to an LCD system in the same manner.

Further, in the LCD system, an LCD panel does not have a light emitting function, so a backlight unit (BLU) using cold cathode fluorescent lamps (CCFLs) or light emitting diodes (LEDs) is used. However, since the BLU has an invisible IR band which overlaps with a near IR band of 650nm or more and an IR band 800nm or more, the BLU may operate as a background noise for an infrared light detecting camera. Furthermore, the camera contrast ratio of the infrared light detecting camera may be reduced due to the light emitted by the BLU.

Therefore, there is a need for a multi-touch detecting apparatus and method which can be applied to an LCD apparatus and avoid influence of a BLU.

### SUMMARY

Exemplary embodiments address at least the above problems and/or disadvantages and other disadvantages not described above. Also, an exemplary embodiment is not required to overcome the disadvantages described above, and an exemplary embodiment may not overcome any of the problems described above.

An aspect of an exemplary embodiment provides a multi-touch detecting apparatus and method which can be applied to an LCD apparatus and avoid influence of a BLU.

According to an aspect of an exemplary embodiment, there is provided a multi-touch detecting apparatus including an LCD module which includes an LCD panel and a BLU, a plurality of infrared light sources which emit infrared light toward the LCD module, an infrared light detecting camera which is disposed under the LCD panel, and detects infrared light reflected from an object on the LCD panel, and a control unit which turns off the BLU when the infrared light detecting camera is turned on.

The multi control unit may control on-timing of the BLU using an off signal of the infrared light detecting camera as a trigger signal.

The LCD module may include a transparent panel, which is touched by a user, at an uppermost surface thereof, and the infrared light sources may emit the infrared light parallel to an inside and a surface of the transparent panel.

The multi-touch detecting apparatus may further include an optical unit which is disposed on a light path of the infrared light sources and moves the infrared light emitted from the infrared light sources so as to be parallel to an inside and a surface of the transparent panel.

The optical unit may include a beam splitter which reflects the infrared light incident from the infrared light sources so as to separately go through the inside and the surface of the transparent panel, and a collimate member which is disposed on one of a light incident surface and a light emergent of the beam splitter so as to secure straightness of the infrared light.

There is at least one infrared light detecting camera at the BLU, and the at least one infrared light detecting camera is disposed in the center of the BLU. As the case may be, two or three infrared light detecting cameras may be disposed at the BLU at regular intervals.

According to an aspect of an exemplary embodiment, the beam splitter may include a first surface which reflects infrared light having a first wavelength and transmits infrared light having the remaining wavelength, and a second surface which reflects all incident light, and the beam splitter may allow the infrared light having the first wavelength to go through the inside of the transparent panel and allow the infrared light having the remaining wavelength to move parallel along the surface of the transparent panel.

According to an aspect of another exemplary embodiment, the beam splitter may include a first surface which transmits infrared light having a first wavelength and reflects infrared light having the remaining wavelength, and a second surface which reflects all incident light, and the beam splitter may allow the infrared light having the first wavelength to go through the inside of the transparent panel and allow the infrared light having the remaining wavelength to move parallel along the surface of the transparent panel.

According to an aspect of another exemplary embodiment, the infrared light sources may be arranged around the transparent panel on a plurality of lines. The infrared light sources include a first line to move the infrared light in the inside of the transparent panel, and a second line to move the infrared light on the surface of the transparent panel.

According to an aspect of another exemplary embodiment, the BLU may use a direct-type lighting method, and the infrared light sources may be disposed on the same plane as the BLU and be formed in two-dimensional arrays so as to have regular intervals with light sources of the BLU.

According to an aspect of another exemplary embodiment, the BLU may use an edge-type lighting method, and the multi-touch detecting apparatus may further include a reflection unit which reflects infrared light reflected from the object toward the infrared light detecting camera.

The reflection unit may include a first reflection mirror which reflects infrared light which penetrates the backlight units and is reflected from the object, and a second reflection mirror which reflects the infrared light reflected from the first reflection mirror toward the infrared light detecting camera.

The infrared light detecting camera may be disposed separately from the BLU.

The infrared light sources, according to exemplary embodiments, may be disposed on a single side of the transparent panel, on two sides of the transparent panel facing each other, or on four sides of the transparent panel.

The infrared light sources may be turned on or off concurrently in association with the infrared light detecting camera.

The infrared light sources may have a horizontal light angle of the infrared light larger than a vertical light angle with respect to the transparent panel.

The transparent panel may be a transparent acrylic material or a hardened protection glass, and the LCD module may include a white reflector which is disposed at a wall thereof and focuses light of the BLU.

According to an aspect of another exemplary embodiment, there is provided a multi-touch detecting method including emitting infrared light from an infrared light source toward an LCD module including a BLU, turning on an infrared light detecting camera and turning off the BLU, detecting infrared light reflected from an object on the LCD module, and turning off the infrared light detecting camera and turning on the BLU.

The emitting the infrared light may include guiding the emitted infrared light to an inside and a surface of a transparent panel which is disposed on the LCD module including the BLU, and in the emitting the infrared light, when the infrared light detecting camera is turned on, the infrared light source may be turned on.

When the infrared light detecting camera is turned off, the infrared light source may be turned off.

The timing when the infrared light detecting camera is turned on may depend on an amount of infrared light which is scattered and incident from the infrared light source, and an amount of adjacent noise, and an on-off period of the BLU may be greater than at least 30Hz.

According to one or more exemplary embodiments, the multi-touch detecting apparatus can provide optical design capable of supporting both the FTIR scheme and the LED-LP scheme, and thus support dynamic finger movement detection as well as static finger movement detection.

In addition, the multi-touch detecting apparatus can detect an infrared light detecting signal without interference with an optical sheet, a transparent panel, a backlight unit, and a white reflector which are installed in the LCD module.

Furthermore, the period in which the infrared light detecting camera is exposed changes in association with on-off operation of the BLU, so the multi-touch detecting apparatus does not receive influence by the BLU. Therefore, precise position tracking of a touch point can be enabled.

### BRIEF DESCRIPTION OF THE DRAWINGS

The above and/or other aspects will be more apparent by describing certain exemplary embodiments with reference to the accompanying drawings, in which:
FIG. 1 is a schematic perspective view of a multi-touch detecting apparatus according to an exemplary embodiment;
FIG. 2 is a schematic perspective view of a multi-touch detecting apparatus according to an exemplary embodiment;
FIG. 3 is a schematic perspective view of a multi-touch detecting apparatus according to an exemplary embodiment;
FIG. 4 is a schematic perspective view of a multi-touch detecting apparatus according to an exemplary embodiment;
FIG. 5 is a schematic perspective view of a multi-touch detecting apparatus according to an exemplary embodiment;
FIG. 6 is a graph illustrating on-off control of an infrared light source, an infrared light detecting apparatus, and a BLU of the multi-touch detecting apparatuses according to an exemplary embodiment; and
FIG. 7 is a flow chart illustrating a multi-touch detecting method according to an exemplary embodiment.

### DETAILED DESCRIPTION OF EXEMPLARY EMBODIMENTS

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters.

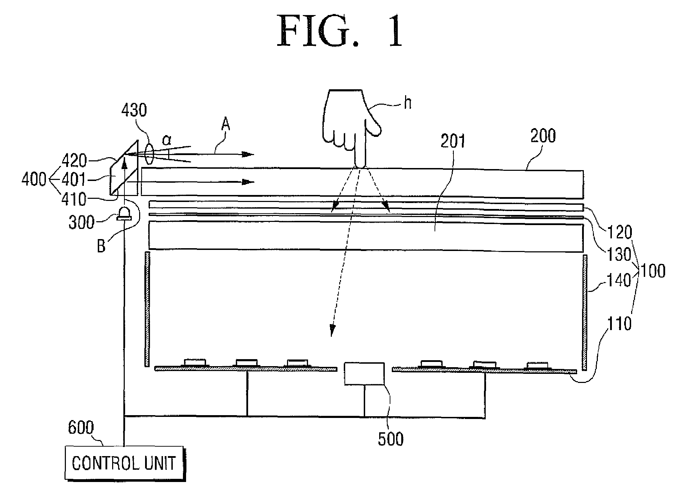

FIG. 1 illustrates an example of a multi-touch detecting apparatus according to an exemplary embodiment.

As illustrated in FIG. 1, the multi-touch detecting apparatus may include an LCD module 100, a transparent panel 200, an infrared light source 300, an optical unit 400, an infrared light detecting camera 500, and a control unit 600. Although the multi-touch detecting apparatus illustrated in a horizontal position for convenience of explanation, it should understood that the multi-touch detecting apparatus may be disposed in a vertical position.

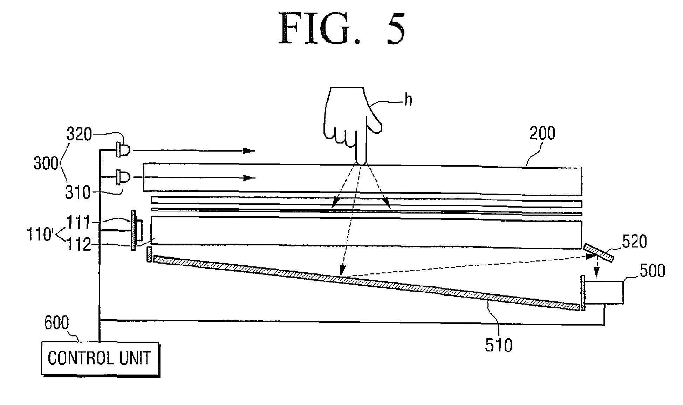

The LCD module 100 may include a BLU 110, an LCD panel 120, a filter layer 130, and a white reflector 140. The BLU 110 may use a direct-type lighting method using a CCFL or a plurality of LEDs, as illustrated in FIGS. 1 to 3, or may use an edge-type lighting method using a plurality of LEDs disposed at the edge-type of a light guide plate, as illustrated in FIG. 5. The filter layer 130 is interposed between the LCD panel 120 and the BLU 110 to transmit light emitted from the BLU 110 toward the LCD panel 120 uniformly. The white reflector 140 is used for the LCDy module 100 having the direct-type light BLU 110, as illustrated in FIGS. 1 to 3, to guide the light emitted from the BLU 110 to the LCD panel 120. If there is no white reflector 140, some or most of the emitted light, which is not transmitted directly to the LCD panel 120, may become a light loss and, thus, the brightness of the display apparatus may decrease. Therefore, the white reflector 140 is installed when the direct-type light BLUs are used.

The transparent panel 200 is disposed on the front surface of the LCD module 100 to prevent damage of the LCD module 100 and enable a user to touch a screen displayed on the LCD module 100. The transparent panel 200 may be formed of a transparent acrylic material, or of a material such as a hardened protection glass. The transparent panel 200 may be spaced a predetermined distance apart from the LCD panel 120 to be prevented from being deformed by heat of the LCD panel 120. In addition, if the transparent panel 200 is spaced a predetermined distance apart from the LCD panel 120, the problem of damaging the LCD panel 120 caused when the transparent panel 200 is touched by a finger and becomes in contact with the LCD panel 120, can be prevented.

A lower transparent panel 201 formed of the same material as the transparent panel 200 may be formed proximate a rear surface of the LCD panel 120 to be spaced a predetermined distance apart from the LCD panel 120. The lower transparent panel 201 supports the LCD panel 120 and the filter layer 130 disposed proximate the rear surface of the LCD panel 120, and may be formed of a hardened protection glass. For example, the lower transparent panel 201 may be formed of a transparent material.

A plurality of infrared light sources 300 may be arranged at regular intervals along a single line or two lines. Since the LCD module 100 has a square shape in general, the infrared light sources 300 may be disposed around the transparent panel 200 on the LCD module 100 or proximate the LCD module 100. The infrared light sources 300 may be disposed at one side of the transparent panel 200, at two opposite sides facing each other, or at four sides.

The direction in which the infrared light sources 300 emit the infrared light can be implemented in various ways according to an exemplary embodiment. Design and presence of the optical unit 400 depend on the infrared light emitting direction and arrangement of the infrared light sources 300. Detailed description is provided below.

The infrared light sources 300 may have a horizontal light angle greater than a vertical light angle(α) with respect to the direction of the infrared light shown by an arrow A moving along a lengthwise direction of the transparent panel 200 in FIG. 1. With this structure, the infrared light which propagates in the interior of the transparent panel 200 or along the front surface of the transparent panel 200 may be substantially parallel to the lengthwise direction of the transparent panel 200, so that the detection of an object (h), such as the finger of the user, which is in contact with the transparent panel 200 can be effectively performed. The greater the horizontal light angle, the fewer the number of infrared light sources 300 may be used. However, if the horizontal light angle is excessively large, the detection capability may be reduced. Therefore, the horizontal light angle may be smaller and the appropriate number of infrared light sources 300 may be used.

The optical unit 400 directs the infrared light emitted from the infrared light sources 300 to propagate through the interior of the transparent panel 200 and along the front surface of the transparent panel 200 at the same time. While the infrared light propagates through the interior of the transparent panel 200 and along the front surface of the transparent panel 200 in this manner at the same time, the infrared light propagating through the interior of the transparent panel 200 is scattered around a touch point of an object touching the transparent panel 200 and is used to detect the static movement caused by the finger. The infrared light propagating in parallel along the front surface of the transparent panel 200 is scattered at the contour line of the touch point of an object touching the transparent panel 200 and is used to detect tracking of the dynamic movement caused by the finger.

A reflection surface of the optical unit 400 is set according to the direction and arrangement of the infrared light sources 300. If the infrared light sources 300 are arranged on a plurality of lines, the optical unit 400 may be omitted. However, the optical unit 400 may be provided to reduce the number of infrared light sources 300. If the optical unit 400 is used, the number of infrared light sources 300 may be reduced approximately in half as compared with the case that the optical unit 400 is not used.

The optical unit 400 may include a beam splitter 401 and a collimating member 430. The collimating member 430 may include a collimating function sheet, or may be implemented as a collimating lens. The beam splitter 401 may include a first surface 410 and a second surface 420. The reflection and penetration properties of the first and second surfaces 410 and 420 depend on the arrangement and emitting direction of the infrared light sources 300.

For example, in an exemplary embodiment shown in FIG. 1, the infrared light sources 300 emit infrared light upwards in a direction of an arrow B. In this case, the first surface 410 reflects infrared light having a first wavelength of the infrared light emitted from the infrared light sources 300 so that the infrared light having the first wavelength propagates in the interior of the transparent panel 200 and the remaining infrared light penetrates the first surface 410 and propagates toward the second surface 420. The second surface 420 reflects the infrared light incident to the second surface 420 so that the infrared light propagates along the front surface of the transparent panel 200. The infrared light reflected by the second surface 420 passes through the collimating member 430 to become parallel light, and propagates along the front surface of the transparent panel 200, maintaining substantial straightness.

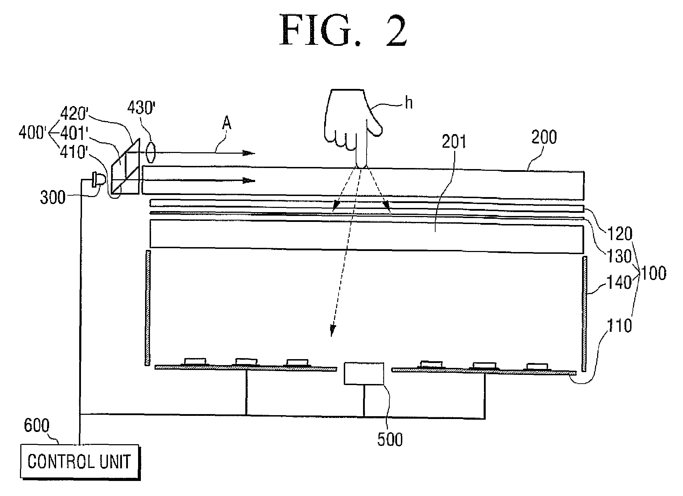

In an exemplary embodiment shown in FIG. 2, the infrared light sources 300 emit infrared light substantially parallel to the lengthwise direction of the transparent panel 200. In this case, the first surface 410' transmits infrared light having a first wavelength of the infrared light emitted from the infrared light sources 300 so that the infrared light having the first wavelength propagates through the interior of the transparent panel 200. The first surface 410' reflects the remaining infrared light so that the remaining infrared light propagates toward the second surface 420', is reflected by the second surface 420', and propagates along the front surface of the transparent panel 200. The infrared light reflected by the second surface 420' passes through the collimating member 430 to become parallel light, and propagates along the front surface of the transparent panel 200, maintaining substantial straightness.

For example, the wavelength of the infrared light distinguished by the first surfaces 410 and 410' may be one of 850nm, 880nm, and 940nm.

If the infrared light sources 300 are arranged on a plurality of lines or are disposed on the same plane as the BLU 110, the optical unit 400 may be omitted.

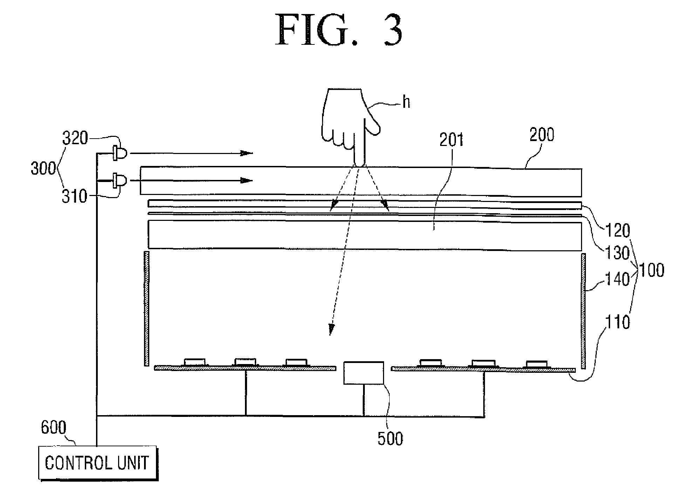

According to exemplary embodiments shown in FIGS. 3 to 5, infrared light sources 300 emit infrared light toward a transparent panel 200 without a separate carrier.

For example, as shown in FIGS. 3 and 5, infrared light emitted from a first light source array 310 propagates in the interior of the transparent panel 200, and infrared light emitted from a second light source array 320 propagates along the front surface of the transparent panel 200. In this case, an optical unit may be omitted.

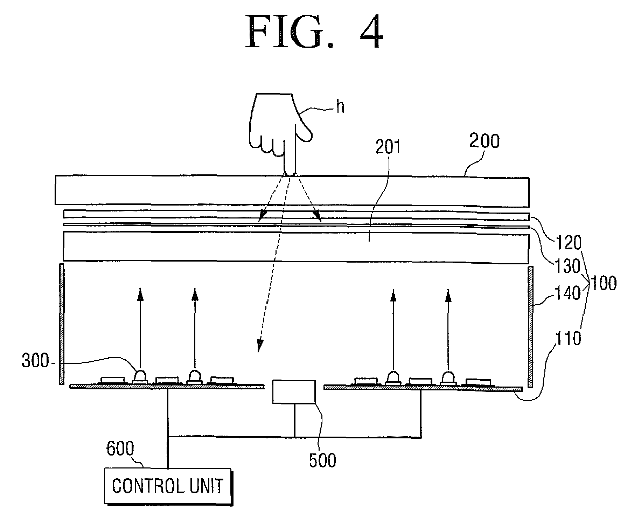

According to an exemplary embodiment shown in FIG. 4, the infrared light sources 300 may be arranged in two-dimensional arrays. In this case, since the infrared light sources 300 and an infrared light detecting camera 500 are disposed on the same plane, an optical unit may be omitted.

In exemplary embodiments shown in FIGS. 1 to 3, there is a single infrared light detecting camera 500 disposed in the center of the BLU 110 to sense infrared light reflected from an object which is in contact with the surface of the transparent panel 200. Alternatively, two or more infrared light detecting cameras 500 may be disposed behind the transparent panel 200 at regular intervals.

In an exemplary embodiment of FIG. 5, an infrared light detecting camera 500 installed in an LCD module 100 having edge-type light BLU 110' is disposed on an external wall of the LCD module 100. The BLU 110' uses first and second reflection mirrors 510 and 520, and the thickness of the display apparatus can be reduced. The edge-type light BLU 110' may be slimmer than the direct-type light BLU 110. The infrared light detecting camera 500 may be disposed at a position capable of reducing the thickness of the display apparatus. In an exemplary embodiment, a light path is formed using the first and second reflection mirrors 510 and 520, but this is merely an example. Three or more reflection mirrors may be used, or just a single reflection mirror may be used.

The control unit 600 concurrently turns on or off the BLU 110, 110', the infrared light sources 300, and the infrared light detecting camera 500, and optimizes the signal-to-noise ratio (SNR) performance.

That is, at an exposed timing at which the infrared light detecting camera 500 is turned on and detects the infrared light, the control unit 600 turns off the BLU 110, 110'. Accordingly, when the BLU 110, 110' is turned off, the infrared light detecting camera 500 detects infrared light reflected from an object which is in contact with the transparent panel 200. If the infrared light detecting camera 500 is turned off, the control unit 600 turns on the BLU 110, 110'.

An on-off control trigger signal of the control unit 600 may use an external trigger signal which uses a microcontroller, or may use a signal which is transmitted to the components, such as the infrared light sources 300, the infrared light detecting camera 500, or the BLU 110, 110'.

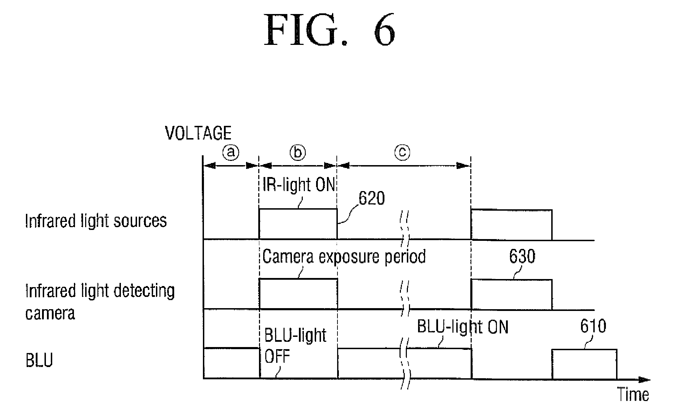

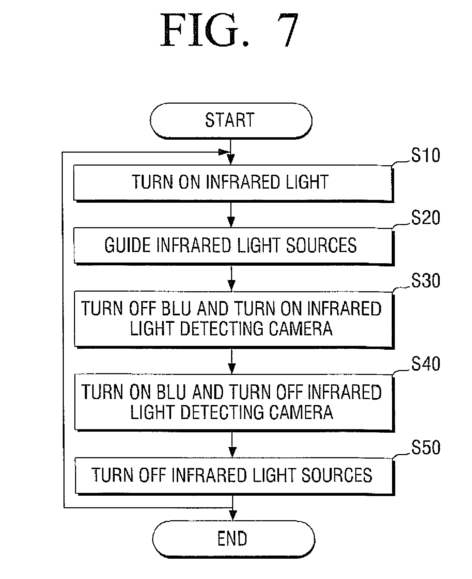

The operation of the control unit 600 is described in detail with reference to FIGS. 6 and 7.

At time sections and shown in the graph 610 of FIG. 6, the BLU 110, 110' is turned on. The infrared light sources 300 and the infrared light detecting camera 500 are turned off as shown in graphs 620 and 630, respectively.

When the display apparatus starts operating, the control unit 600 turns on the infrared light sources 300 (S10).

Subsequently, infrared light emitted from the infrared light sources 300 is guided to propagate in the interior of the transparent panel 200 and along the front surface of the transparent panel 200. There are various methods for guiding the infrared light to propagate in the interior of the transparent panel 200 and along the front surface of the transparent panel 200 as described above (S20).

Using the on-signal of the infrared light sources 300 as a trigger signal, the control unit 600 turns off the BLU 110, 110' and turns on the infrared light detecting camera 500 (S30) as illustrated by the graph 630 at time section , thereby making an exposed state. Accordingly, since the BLU 110, 110' is turned off, infrared light reflected from a finger or an object (h) which is in contact with the surface of the transparent panel 200, can be input to the infrared light detecting camera 500 without interference and disturbance with the infrared band of the BLU 110, 110'.

If the BLU 110, 110' is turned on and the infrared light detecting camera 500 is turned on, the noise of the near IR band and the IR band included in the light of the BLU 110, 110' may be mixed with the infrared light reflected from the object (h), so that the infrared light detecting camera 500 may not detect a touch point of the object (h) with precision. However, if the BLU 110, 110' is turned off and the infrared light detecting camera 500 is turned on, the noise interference may be mitigated or eliminated.

In particular, if the infrared light sources 300 are turned on at time section as shown in the graph 620 of FIG. 6, it is possible to emit infrared light having high peak strength, so that the SNR of the infrared light detecting camera 500 can be enhanced during the detection of the touch of the finger or object (h) at time section .

The length of time section for detecting the finger or the object (h) depends on the amount of infrared light reflected from the finger or the object (h) which is touching the surface of the transparent panel 200, and the amount of noise. The stronger the reflected infrared light, the shorter the detecting time. However, if excessively strong infrared light is used, the infrared light may affect other electronic devices. Therefore, the strength of infrared light may be set appropriately. At time section, since the BLU 110, 110' is turned off, the display apparatus may look dark, so the time section may be set to be short. Therefore, the strength of infrared light should not be excessively low. The infrared peak strength of the infrared light sources 300 varies according to the system.

Reiteration of on-off time section may be considered according to the optical-electrical circuit property of the infrared light sources 300, the infrared light detecting camera 500, and the BLU 110, 110'.

At time section in FIG. 6, if the detection of the infrared light is complete, the control unit 600 turns on the BLU 110, 110' and turns off the infrared light detecting camera 500 (S40).

Subsequently, the control unit 600 turns off the infrared light sources 300 (S50). The infrared light sources 300 can be controlled to be in a continuous-wave mode in which the infrared light sources 300 are always turned on, but it is not appropriate for the infrared light sources 300 to always emit infrared light. Infrared light is generally used for remote controllers for controlling electronic devices, so if the infrared light sources 300 always emit infrared light, the infrared light may be confused with control signals of other electronic devices and may cause malfunction.

Subsequently, the infrared light sources 300 are turned on when the infrared light detecting camera 500 is turned on and the BLU 110, 110' is turned off.

As described above, the BLU 110, 110' is turned on and off periodically. If the on-off period of the BLU 110 is slow, the user may feel the flicker of the screen of the display apparatus. Therefore, the on-off period of the BLU 110 may be set to be fast. For example, the on-off period of the BLU 110, 110' may be set to be faster than 30Hz.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A multi-touch detecting apparatus comprising:
a liquid crystal display (LCD) module which comprises an LCD panel and a backlight unit (BLU);
a plurality of infrared light sources which emits infrared light toward the LCD module;
an infrared light detecting camera which is disposed behind the LCD panel and detects infrared light reflected from an object on the LCD panel; and
a control unit which turns off the BLU when the infrared light detecting camera is turned on.

2. The multi-touch detecting apparatus according to claim 1, wherein the control unit controls on-timing of the BLU using an off signal of the infrared light detecting camera as a trigger signal.

3. The multi-touch detecting apparatus according to claim 1, wherein the LCD module comprises a transparent panel, which is touched by a user, at an uppermost surface thereof.

4. The multi-touch detecting apparatus according to claim 3, wherein the plurality of infrared light sources emits the infrared light parallel to an interior surface and the uppermost surface of the transparent panel.

5. The multi-touch detecting apparatus according to claim 3, further comprising:
an optical unit which is disposed on a light path of the plurality of infrared light sources and directs the infrared light emitted from the plurality of infrared light sources to be parallel to an interior surface and to the uppermost surface of the transparent panel.

6. The multi-touch detecting apparatus according to claim 5, wherein the optical unit comprises:
a beam splitter which reflects the infrared light incident from the plurality of infrared light sources so as to separately propagate inside and along the uppermost surface of the transparent panel; and
a collimating member which is disposed on one of light incident surfaces of the beam splitter so as to secure straightness of the infrared light.

7. The multi-touch detecting apparatus according to claim 6, wherein the beam splitter comprises a first surface which reflects infrared light having a first wavelength and transmits infrared light having remaining wavelengths, and a second surface which reflects all incident light, and allows the infrared light having the first wavelength to propagate through the inside of the transparent panel and allows the infrared light having the remaining wavelengths to propagate parallel along the uppermost surface of the transparent panel.

8. The multi-touch detecting apparatus according to claim 6, wherein the beam splitter comprises a first surface which transmits infrared light having a first wavelength and reflects infrared light having remaining wavelengths, and a second surface which reflects all incident light, and allows the infrared light having the first wavelength to propagate through the inside of the transparent panel and allows the infrared light having the remaining wavelengths to propagate parallel along the uppermost surface of the transparent panel.

9. The multi-touch detecting apparatus according to claim 1, wherein the infrared light detecting camera is disposed at the BLU.

10. The multi-touch detecting apparatus according to claim 9, wherein the infrared light detecting camera is disposed in a center of the BLU.

11. The multi-touch detecting apparatus according to claim 9, further comprising a plurality of infrared light detecting cameras disposed at the BLU.

12. The multi-touch detecting apparatus according to claim 3, wherein the plurality of infrared light sources comprises a first light source array which emits infrared light parallel along an interior surface of the transparent panel, and a second light source array which is disposed above the first light source array and emits infrared light parallel to the uppermost surface of the transparent panel.

13. The multi-touch detecting apparatus according to claim 1, wherein the BLU uses an edge lighting method, the multi-touch detecting apparatus further comprises a reflection unit which reflects infrared light reflected from the object toward the infrared light detecting camera, the reflection unit comprising:
a first reflection mirror which reflects infrared light which penetrates the backlight unit and is reflected from the object; and
a second reflection mirror which reflects the infrared light reflected from the first reflection mirror toward the infrared light detecting camera, wherein
the infrared light detecting camera is disposed outside the BLU.

14. The multi-touch detecting apparatus according to claim 3, wherein the plurality of infrared light sources is disposed on a single side of the transparent panel.

15. A multi-touch detecting method comprising:
emitting infrared light from an infrared light source toward a liquid crystal display (LCD) module comprising a backlight unit (BLU);
turning on an infrared light detecting camera and turning off the BLU;
detecting infrared light reflected from an object on the LCD module; and
turning off the infrared light detecting camera and turning on the BLU,
wherein the emitting the infrared light comprises guiding the emitted infrared light to an inside and along a surface of a transparent panel which is disposed on the LCD module comprising the BLU, and
wherein in the emitting the infrared light, when the infrared light detecting camera is turned on, the infrared light source is turned on.
